# EUROPEAN PATENT SPECIFICATION

(11) **EP 1 406 029 B1**
(45) Date of publication and mention of the grant of the patent: **27.09.2006**
(21) Application number: 03255390.1
(22) Date of filing: 29.08.2003
(51) Int. Cl.: F16H 7/08

(54) **Hydraulic chain tensioner**
Hydraulischer Kettenspanner
Dispositif tendeur hydraulique pour chaînes

(30) Priority: 04.10.2002 US 264809
(43) Date of publication of application: 07.04.2004
(73) Proprietor: BorgWarner Inc., Auburn Hills, MI 48326-2872 (US)
(72) Inventor: Markley, George L., Montour Falls New York 14865 (US); Haesloop, J. Christian, Ithaca New York (US)
(74) Representative: Lerwill, John

(56) References cited:
- DE-A- 4 319 229
- DE-A- 10 007 478
- DE-A- 19 646 488
- DE-A- 19 717 360
- DE-C- 19 500 940
- US-A- 5 718 650

## Description

### BACKGROUND OF THE INVENTION

### FIELD OF THE INVENTION

The present invention relates generally to tensioners used with chain drives in automotive timing and power transmission applications. In particular, the present invention is related to a hydraulic chain tensioner system, and to a method of applying tension to a chain according to the preamble of claims 1, 17.

### DESCRIPTION OF RELATED ART

A tensioning device, such as a hydraulic tensioner, is used as a control device for a power transmission chain, or similar power transmission devices, as the chain travels between a plurality of sprockets. In this device, the chain transmits power from a driving shaft to a driven shaft, so that part of the chain is slack and part of the chain is tight. Generally, it is important to impart and maintain a certain degree of tension in the chain to prevent noise, slippage, or the unmeshing of teeth in the case of a toothed chain. Prevention of such slippage is particularly important in the case of a chain driven camshaft in an internal combustion engine because jumping of teeth will throw off the camshaft timing, possibly causing damage or rendering the engine inoperative.

However, in the harsh environment of an internal combustion engine, various factors can cause fluctuations in the chain tension. For instance, wide variations in temperature and thermal expansion coefficients among the various parts of the engine can cause the chain tension to vary between excessively high or low levels. During prolonged use, wear to the components of the power transmission system can cause a decrease in chain tension. In addition, camshaft and crankshaft induced torsional vibrations cause considerable variations in chain tensions. Reverse rotation of an engine, occurring for example in stopping or in failed attempts at starting, can also cause fluctuations in chain tension. For these reasons, a mechanism is desired to remove excessive tensioning forces on the tight side of the chain and to ensure the necessary tension on the slack side of the chain.

Hydraulic tensioners are a common method of maintaining proper chain tension. In general, these mechanisms employ a lever arm that pushes against the chain on the slack side of the power transmission system. This lever arm must push toward the chain, tightening the chain when the chain is slack, and must be very rigid when the chain tightens.

To accomplish this result, a hydraulic tensioner typically comprises a rod or cylinder as a piston, which is biased in the direction of the chain by a tensioner spring. The piston is housed within a cylindrical housing, having an interior space which is open at the end facing the chain and closed at the other end. The interior space of the housing contains a pressure chamber in connection with a reservoir or exterior source of hydraulic fluid pressure. The pressure chamber is typically formed between the housing and the piston, and it expands or contracts when the piston moves within the housing.

Typically, valves are employed to regulate the flow of fluid into and out of the pressure chamber. For instance, an inlet check valve typically includes a ball-check valve that opens to permit fluid flow in to the pressure chamber when the pressure inside the chamber has decreased as a result of outward movement of the piston. When the pressure in the pressure chamber is high, the inlet check valve closes, preventing fluid from exiting the pressure chamber. The closing of the inlet check valve prevents the piston chamber from contracting, which in turn prevents the piston from retracting, achieving a so-called "no-return" function.

Many tensioners also employ a pressure relief mechanism that allows fluid to exit the pressure chamber when the pressure in the chamber is high, thus allowing the piston to retract in response to rapid increases in chain tension. In some tensioners, the pressure relief mechanism is a spring biased check valve. The check valve opens when the pressure exceeds a certain pressure point. Some tensioners may employ a valve which performs both the inlet check function as well as the pressure relief function.

Other mechanisms employ a restricted path through which fluid may exit the fluid chamber, such that the volume of flow exiting the fluid chamber is minimal unless the pressure in the fluid chamber is great. For instance, a restricted path may be provided through the clearance between the piston and bore, through a vent tube in the protruding end of the piston, or through a vent member between the fluid chamber and the fluid reservoir.

A hydraulic tensioner as used with a tensioner arm or shoe is shown in Simpson et al., U.S. Pat. No. 5,967,921, incorporated herein by reference. Hydraulic chain tensioners typically have a plunger slidably fitted into a chamber and biased outward by a spring to provide tension to the chain. A lever, arm or shoe is often used at the end of the plunger to assist in the tensioning of the chain. The hydraulic pressure from an external source, such as an oil pump or the like, flows into the chamber through passages formed in the housing. The plunger is moved outward against the arm by the combined efforts of the hydraulic pressure and the spring force.

When the plunger tends to move in a reverse direction (inward) away from the chain, typically a check valve is provided to restrict the flow of fluid from the chamber. In such a fashion, the tensioner achieves a so-called no-return function, i.e., movements of the plunger are easy in one direction (outward) but difficult in the reverse direction.

Another hydraulic tensioner is shown in the closest prior art document U.S. Pat. No. 6,383,103. This patent shows a hydraulic tensioner with a relief valve mechanism assembled in a plunger and held in fluid communication with a high-pressure oil chamber. The relief valve mechanism includes an orifice and a relief valve.

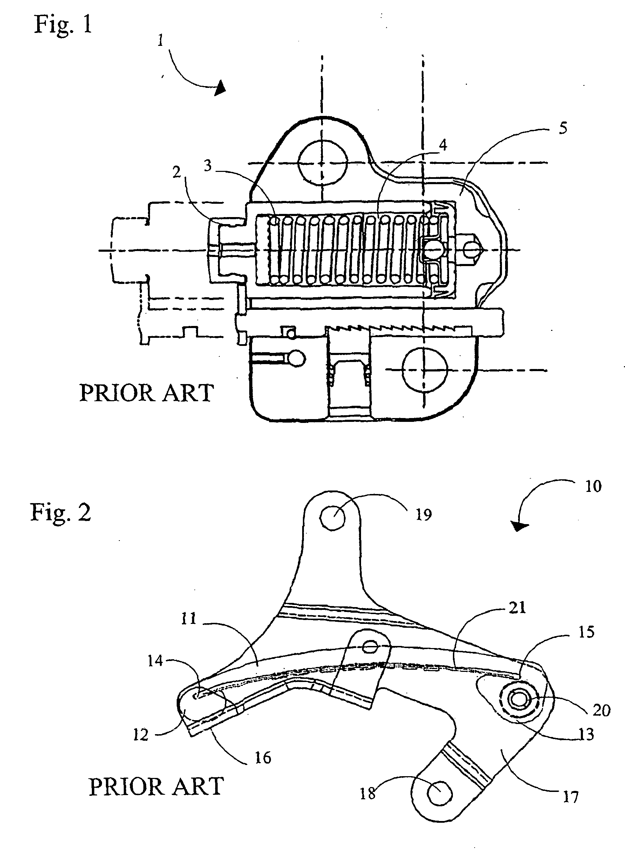

Blade and block tensioners have been used in the past to apply tension to chains. A block tensioner (1) as known in the prior art is shown in Fig. 1. The tensioner (1) has a piston (2) located within a housing (5). The springs (3) are located in a fluid chamber (4) within the piston (2).

An example of a blade tensioner is shown in Fig. 2. The conventional blade tensioner (10) includes a blade shoe (11) made of resin having a curved chain sliding face and numerous blade springs (21) preferably made of metallic material. The blade springs (21) are arranged in layers on the opposite side of the blade shoe (11) from the chain sliding face, and provide spring force to the blade shoe (11). The ends of each spring-shaped blade spring (21) are inserted in the indented portions (14) and (15) which are formed in the distal portion (12) and proximal portion (13) of the blade shoe (11), respectively.

A bracket (17) is provided for mounting the blade tensioner (10) in an engine. Holes (18) and (19) are formed in the bracket (17), and mounting bolts are inserted into these holes (18) and (19). A sliding face (16) contacts the distal portion of the blade shoe (11) and permits sliding. The slide face (16) is formed on the distal portion of the bracket (17). A pin (20) supports the proximal portion (13) of the blade shoe (11) so that it may move in either direction. The pin (20) is secured in the center of the bracket (17).

U.S. Patent No. 5,647,811, shows a chain tensioner with an integrated tensioner and arm. The hydraulic tensioner in that patent is pressure fed.

Due to space restrictions, functionality or numerous other reasons, common tensioners such as the block type tensioners (Fig. 1) and blade type tensioners (Fig. 2) discussed above cannot be used in some applications. Therefore, there is a need in the art for an improved tensioner which can overcome the prior art shortcomings.

### SUMMARY OF THE INVENTION

The present invention provides a hydraulic tensioner for applying tension to a chain, comprising:
a) a piston assembly comprising:
   i) a piston with a hollow interior, and a piston bore surrounding the piston and confining a chamber therewith;
   ii) an inlet check valve for controlling entry of fluid into the chamber; and
b) a non-return mechanism coupled to the piston to allow extension of the piston characterized in that
   the inlet check valve is located such that when an end of the piston assembly is submerged in fluid, the inlet check valve is located below the fluid level and permits flow of the fluid into the chamber;
   the non-return mechanism is arranged to allow retraction of the piston by no more than an included backlash amount;
   the piston assembly further comprises an outlet check valve for preventing air entry when the piston extends and permitting controlled fluid outflow when the piston retracts, located at an opposite end of the piston assembly from the inlet check valve; and
the tensioner acts as a self-priming pump whereby the piston motion allowed by the included backlash amount in combination with the inlet check valve and the outlet check valve, enables the tensioner to draw fluid into the chamber for filling the chamber without fluid being supplied from an external source under pressure.

Advantageously the tensioner can tension a chain without any need for an external fluid pressure supply. An end of the piston assembly can be submerged in fluid. The inlet check valve, which controls entry of fluid into the piston, is preferably located below the fluid level.
The invention correspondingly provides a method of applying tension to a chain comprising the steps of:
a) providing a tensioner comprising:
   i) a piston assembly comprising:
      A) a piston with a hollow interior and a piston bore surrounding the piston:
      B) an inlet check valve for controlling an entry of fluid into the piston, located such that when an end of the piston assembly is submerged in fluid, the inlet check valve permits fluid flow into the hollow interior; and
   ii) a non-return mechanism coupled to the piston such that the piston is extendable
   characterized by
   the piston assembly further comprising an outlet check valve for preventing air entry when the piston extends and permitting controlled fluid overflow when the piston retracts, located at an opposite end of the piston assembly from the inlet check valve; and the non-return mechanism allowing retraction of the piston by no more than an included backlash amount;
b) submerging an inlet end of the tensioner in a fluid supply such that an inlet check valve is under a level of the fluid supply;
c) self-priming the tensioner, wherein the tensioner lifts the fluid supply into the tensioner due to piston motion within the included backlash amount and due to action of the inlet check valve and the outlet check valve, to fill an interior of the tensioner.

### BRIEF DESCRIPTION OF THE DRAWINGS

Fig. 1 shows a block tensioner as known in the prior art.
Fig. 2 shows a blade tensioner as known in the prior art.
Fig. 3 shows a hydraulic tensioner of the present invention.
Fig. 4 shows a blown up view of the tensioner arm in Fig. 3.
Fig. 5 shows another blown up view of the tensioner arm in Fig. 3.
Fig. 6 shows a preferred embodiment of the hydraulic tensioner of the present invention.
Fig. 7 shows a blown up view of the umbrella check valve shown in Fig. 6.
Fig. 8 shows another preferred embodiment of the hydraulic tensioner of the present invention.

### DETAILED DESCRIPTION OF THE INVENTION

In some of the applications where the prior art tensioners of Fig. 1 and 2 could not be used, a tensioner arm incorporating a spring-loaded piston pushing against a stationary object would suffice. However, the limitation of a spring loaded piston is that the spring force to overcome peak chain loading and to maintain chain control causes excessive chain wear.

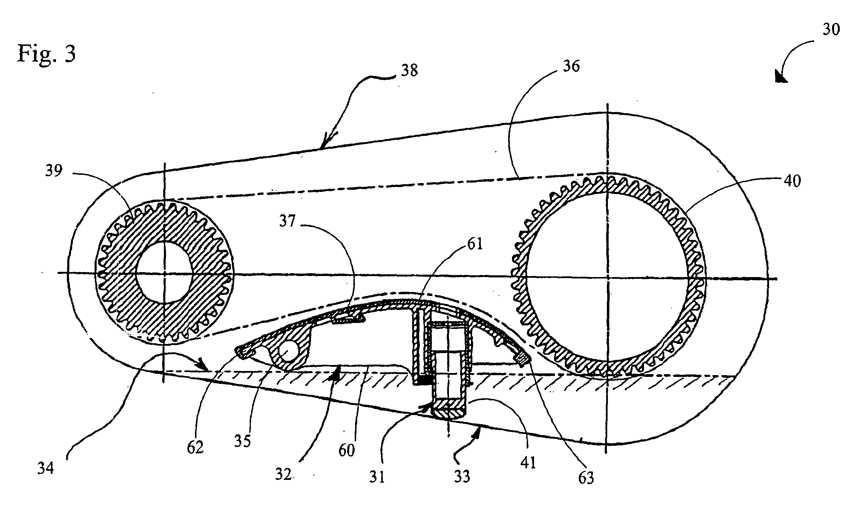

Referring now to Figs. 3 through 5, a preferred embodiment of the present invention is shown. A power transmission device (30) comprises a chain (36) or belt (not shown) operating between two sprockets (39) and (40). A case (38) preferably encloses the device and also acts as an abutment (33) for a piston (31), which is preferably spring-loaded. The chain sliding face (37) of a tensioner arm (32) mounted on a pivot (35) presses against the chain (36) to maintain tension.

The tensioner arm (32) has a first side (60) and a second side (61) spaced from the first side. A first end (62) is disposed between the first (60) and second (61) sides. A second end (63) is disposed between the first (60) and second (61) sides, and spaced from the first end (62). Preferably, the first (62) and second (63) ends join the first and second sides. The second side (61) provides the chain sliding face (37) which is in contact with the chain (36) to be tensioned. Preferably, the second side (61) is arcuately shaped to provide a suitable chain travel surface. Of course, it will be understood by one skilled in the art that the second side (61) can have any suitable shape as dictated by manufacturing and consumer preference concerns.

The tensioner arm (32) may be made from any material that meets all structural, environmental, wear and durability criteria. Materials such as steel, aluminum and plastics are preferably used as well as composites such as glass filled nylon.

The chain sliding face (37) of a tensioner arm (32) may be made from any durable wear resistant material. A synthetic material, such as nylon, which has high wearability and durability characteristics can be used. In particular, Nylon 6/6 is one commercially available material that may be used. Alternatively, the chain sliding face may be made of PEEK (polyetheretherketone), which also has high wearability and durability characteristics. One of ordinary skill in the art would be capable of selecting one of these or other numerous suitable materials.

The hydraulic tensioner (41) includes the piston (31), which applies force to the tensioner arm (32). In a preferred embodiment, the tensioner (41) is combined and incorporated into the tensioner arm (32) for improved packaging. The tensioning device extends from the tensioner arm (32). The button, or bottom end of the piston (47) contacts a stationary abutment (33). This contact forces the arm (32) away from the abutment (33) and into the chain path, causing tension.

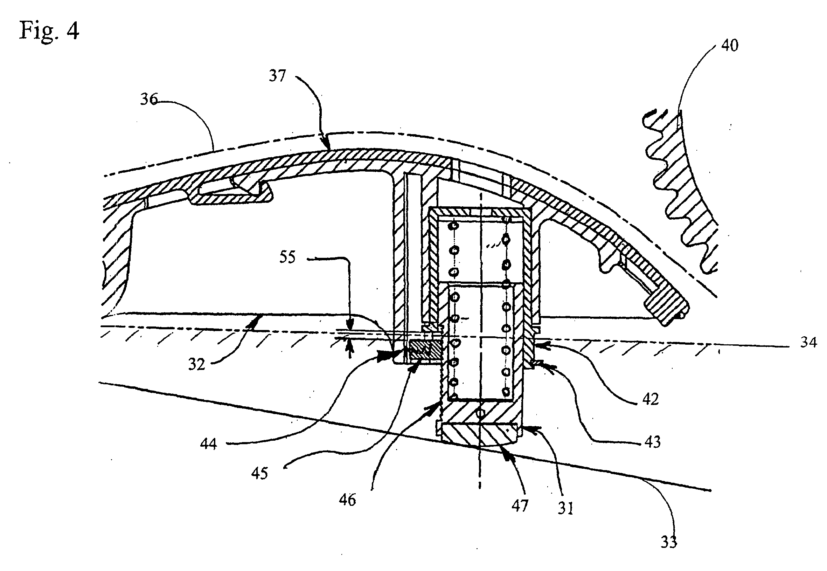

A non-return mechanism coupled to the piston (31) ensures that the piston (31) extends but does not retract more than an included backlash (55) amount. Non-return mechanisms take up worn chain slack to prevent sprocket tooth jump of the chain. In a preferred embodiment, the non-return mechanism is a ratcheting mechanism, but it will be understood by one skilled in the art that other non-return mechanisms are possible within the teachings of the invention, such as a cam, roller wedge or sprague mechanism, or rod-and-catch plate arrangement. The ratchet teeth (46) are located on the side of the piston (31), engaging ratchet teeth on a pawl (45) (see Fig. 4). A spring (44) is preferably located within the pawl (45) to maintain engagement of the pawl (45) to the ratchet teeth (46). The pawl (45) moves in and out along the axis of the spring (44). The pawl (45) motion is restricted to allow the piston (31) to extend but not retract except for the included backlash (55) amount. The pawl (45) prevents excessive chain motion due to peak chain loads or insufficient hydraulic pressure.

Applying the above concept in an application using oil bath chain lubrication allows an end of the tensioning piston (31) to be submerged in the fluid bath. As shown in the figures, the fluid level (34) is above the extended portion of the piston (31).

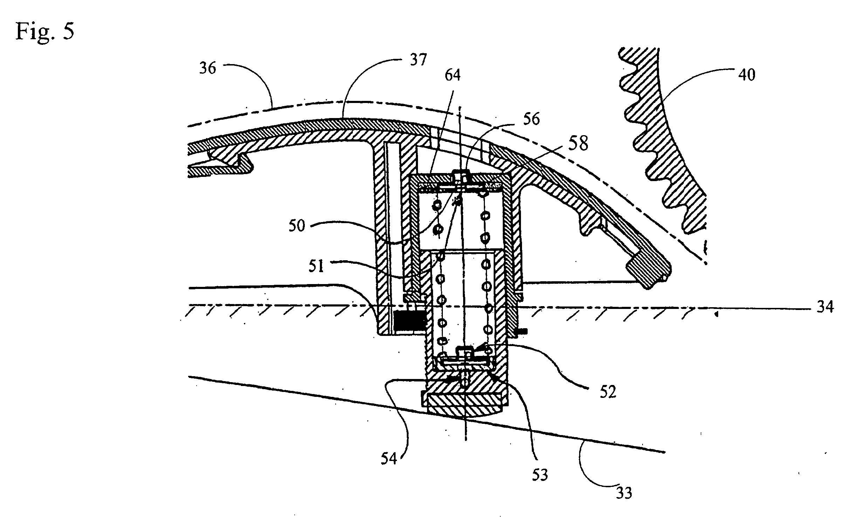

A fluid inlet passageway (54) feeding an inlet check valve (52) is located in the submerged end of the piston (31) (see Fig. 5). A seal (53) ensures that there is little or no leakage. An outlet flow control, shown as check valve (50) and an outlet passageway (56) is located in the insert (42) at the other end of the piston-insert chamber. The outlet flow control prevents air entry when the piston extends, and permits controlled fluid outflow when the piston retracts. As long as the inlet check valve (52) is submerged in fluid, the inlet check valve (52) could alternatively be located in the insert (42) and the outlet flow control (50) could alternatively be located in the piston (31). A seal (64) ensures that there is little or no leakage.

The included backlash amount in the non-return mechanism, combined with the inlet check valve and outlet flow control in the piston, allows the tensioner to act as a self priming (purging) pump, without the need for an external fluid pressure supply. If the outlet passageway (56) is further restricted with an orifice (51) or tortuous path (58) or the like, the action of the hydraulic tensioner will be damped. In some applications, a tortuous path (58) alone can act as an outlet flow control.

A retaining ring (43) is preferably located on a side of the insert (42) to contain the pawl (45) and a spring (44) when the piston (31) extends. The pawl (45) is preferably slidably connected to the tensioner arm and contained by the retaining ring (43). In a preferred embodiment, the pawl (45) is guided in a channel, which is preferably U-shaped. The pawl (45) slides up and down in the channel.

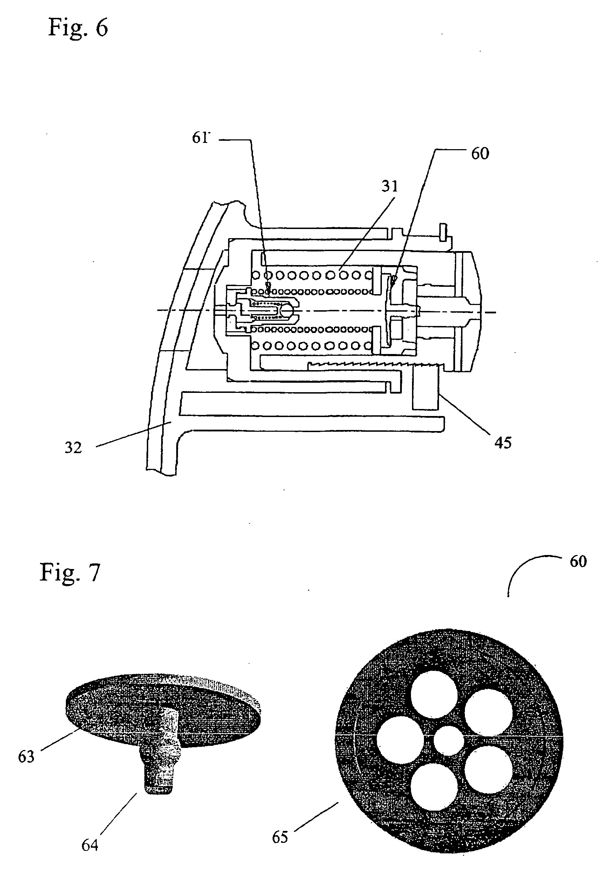

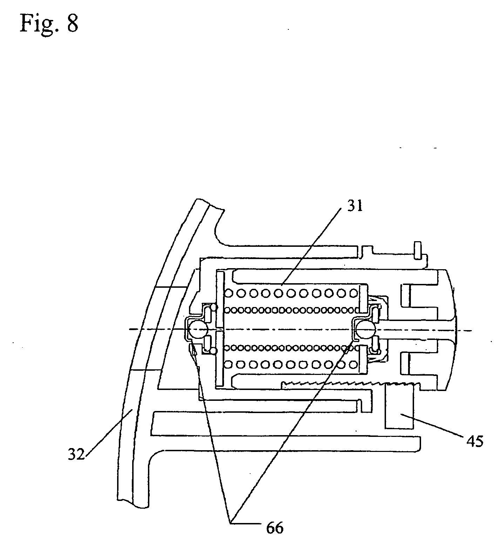

In one example of the invention, shown in Figs. 6 and 7, the inlet check valve is an umbrella check valve (60). The umbrella check valve (60) includes a skirt (63), a stem (64), and a seat (65). In this example, the outlet flow control is preferably a pressure relief valve (61). The pressure relief valve (61) allows fluid to exit the piston (31) when the pressure in the piston (31) is high, thus allowing the piston to retract in response to rapid increases in chain tension. In another example, shown in Fig. 8, the inlet check valve and the outlet flow control are both ball check valves (66).

Accordingly, it is to be understood that the embodiments of the invention herein described are merely illustrative of the application of the principles of the invention. Reference herein to details of the illustrated embodiments is not intended to limit the scope of the claims, which themselves recite those features regarded as essential to the invention.

## Claims

1. A hydraulic tensioner for applying tension to a chain, comprising:
a) a piston assembly comprising:
i) a piston (31) with a hollow interior, and a piston bore (42) surrounding the piston (31) and confining a chamber therewith;
ii) an inlet check valve (52) for controlling entry of fluid into the chamber; and
b) a non-return mechanism (44-46) coupled to the piston (31) to allow extension of the piston (31)
**characterized in that**
the inlet check valve (52) is located such that when an end of the piston assembly is submerged in fluid, the inlet check valve (52) is located below the fluid level (34) and permits flow of the fluid into the chamber;
the non-return mechanism (44-46) is arranged to allow retraction of the piston by no more than an included backlash amount (55);
the piston assembly further comprises an outlet check valve (50) for preventing air entry when the piston extends and permitting controlled fluid outflow when the piston retracts, located at an opposite end of the piston assembly from the inlet check valve (52); and
the tensioner acts as a self-priming pump whereby the piston motion allowed by the included backlash amount (55) in combination with the inlet check valve and the outlet check valve, enables the tensioner to draw fluid into the chamber for filling the chamber without fluid being supplied from an external source under pressure.

2. A tensioner according to claim 1, wherein the non-return mechanism comprises:
a) a plurality of ratchet teeth (46) formed along a length of the piston (31); and
b) a pawl (45) disposed adjacent to the piston (31), wherein the pawl (45) comprises a plurality of ratchet teeth which engage the ratchet teeth (46) on the piston (31).

3. A tensioner according to claim 1 or 2, further comprising an inlet passageway (54) from the interior to the exterior of the piston (31), wherein the inlet passageway (54) is connected to the inlet check valve.

4. A tensioner according to any one of claims 1 to 3, further comprising an outlet passageway (56) from the interior to the exterior of the piston (31), wherein the outlet passageway is connected to the outlet check valve.

5. A tensioner according to claim 4, wherein the outlet passageway (56) is shaped to provide the hydraulic tensioner with damping.

6. A tensioner according to claim 4 or 5, further comprising an orifice (51) restricting the outlet passageway.

7. A tensioner according to any one of claims 4 to 6, further comprising a tortuous path (58) restricting the outlet passageway.

8. A tensioner according to any one of claims 1 to 7, wherein the outlet check valve comprises a ball check valve (66).

9. A tensioner according to any one of the preceding claims, further comprising a tensioner arm (32) having a chain side (37) for contact with the chain (36) to be tensioned, wherein at least part of the tensioner other than the tensioner arm (32) itself is disposed in the tensioner arm(32).

10. A tensioner according to claim 9, further comprising a stationary abutment (33) which contacts an extendable end of the piston (31) such that the tensioner arm (32) is pushed away from the stationary abutment (33) and into a path of the chain (36).

11. A tensioner according to any one of the preceding claims, wherein the inlet check valve (52) is located in the piston (31) and the outlet check valve (50) is located in the piston bore (42).

12. A tensioner according to any one of claims 1 to 10, wherein the inlet check valve (52) is located in the piston bore (42) and the outlet check valve (50) is located in the piston (31).

13. A tensioner according to any one of the preceding claims, wherein the inlet check valve (52) is an umbrella check valve (60).

14. A tensioner according to any one of the preceding claims, wherein the inlet check valve (52) is a ball check valve (66).

15. A tensioner according to any one of the preceding claims, wherein, when the end of the piston assembly is submerged in fluid, the inlet check valve (52) is located below the fluid level.

16. A tensioner according to claim 3, wherein the tensioner is mounted such that the inlet passageway (54) is located below the fluid level when the end of the piston assembly is submerged in fluid.

17. A method of applying tension to a chain comprising the steps of:
a) providing a tensioner comprising:
i) a piston assembly comprising:
A) a piston (31) with a hollow interior and a piston bore (42) surrounding the piston (31);
B) an inlet check valve (52) for controlling an entry of fluid into the piston, located such that when an end of the piston assembly is submerged in fluid, the inlet check valve permits fluid flow into the hollow interior; and
ii) a non-return mechanism coupled to the piston (31) such that the piston (31) is extendable
**characterized by**
the piston assembly further comprising an outlet check valve (50) for preventing air entry when the piston extends and permitting controlled fluid overflow when the piston retracts, located at an opposite end of the piston assembly from the inlet check valve (52); and the non-return mechanism allowing retraction of the piston (31) by no more than an included backlash amount;
b) submerging an inlet end of the tensioner in a fluid supply such that the inlet check valve (52) is under a level of the fluid supply;
c) self-priming the tensioner, wherein the tensioner lifts the fluid supply into the tensioner due to piston motion within the included backlash amount and due to action of the inlet check valve and the outlet check valve, to fill an interior of the tensioner.

## Patentansprüche

1. Hydraulischer Kettenspanner zum Aufbringen von Spannung auf eine Kette, mit:
a) einer Kolbenanordnung mit
i) einem Kolben (31) mit einem hohlen Innenraum und einer Kolbenbohrung (42), die den Kolben (31) umgibt und eine Kammer mit diesem einschließt;
ii) einem Einlassregulierventil (52) zum Steuern des Eintritts von Flüssigkeit in die Kammer, und
b) einem mit dem Kolben (31) verbundenen Rücklaufsperrmechanismus (44 - 46), um das Ausfahren des Kolbens zu ermöglichen,
**dadurch gekennzeichnet, dass**
das Einlassregulierventil (52) derart angeordnet ist, dass das Einlassregulierventil (52) unter dem Flüssigkeitsspiegel (34) liegt und den Strom der Flüssigkeit in die Kammer ermöglicht, wenn ein Ende der Kolbenanordnung in die Flüssigkeit eingetaucht ist;
der Rücklaufsperrmechanismus (44 - 46) das Einziehen des Kolbens um höchstens einen einbegriffenen Spielbetrag (55) ermöglichen kann;
die Kolbenanordnung des Weiteren ein Auslassregulierventil (50) umfasst, damit keine Luft eintreten kann, wenn der Kolben ausfährt, und ein gesteuerter Ausfluss ermöglicht wird, wenn der Kolben einfährt, und das an dem Ende der Kolbenanordnung angeordnet ist, die dem Einlassregulierventil (52) gegenüber liegt; und
der Spanner als selbstansaugende Pumpe wirkt, wodurch die durch den einbegriffenen Spielbetrag (55) ermöglichte Kolbenbewegung in Kombination mit dem Einlassregulierventil (52) und dem Auslassregulierventil (50) ermöglicht, dass der Spanner Flüssigkeit zum Füllen der Kammer in die Kammer saugt, ohne dass Flüssigkeit aus einer unter Druck stehenden äußeren Quelle zugeführt wird.

2. Spanner nach Anspruch 1, wobei der Rücklaufsperrmechanismus folgendes umfasst:
a) eine Vielzahl von Klinkenradzähnen (46), die entlang einer Länge des Kolbens (31) ausgebildet sind, und
b) eine angrenzend an den Kolben (31) angeordnete Klinke (45), wobei die Klinke (45) eine Vielzahl von Klinkenradzähnen umfasst, die mit den Klinkenradzähnen (46) an dem Kolben in Eingriff kommen.

3. Spanner nach Anspruch 1 oder 2, des Weiteren mit einem Einlassweg (54) von dem Innenraum zu dem Außenraum des Kolbens (31), wobei der Einlassweg (54) mit dem Einlassregulierventil verbunden ist.

4. Spanner nach einem der Ansprüche 1 bis 3, des Weiteren mit einem Auslassweg (56) von dem Innenraum zu dem Außenraum des Kolbens (31), wobei der Auslassweg mit dem Auslassregulierventil verbunden ist.

5. Spanner nach Anspruch 4, wobei der Auslassweg (56) derart geformt ist, dass er auf den hydraulischen Spanner ein Dämpfung ausübt.

6. Spanner nach Anspruch 4 oder 5, des Weiteren mit einer Öffnung (51), die den Auslassweg einengt.

7. Spanner nach einem der Ansprüche 4 bis 6, des Weiteren mit einem gewundenen Weg (58), der den Auslassweg einengt.

8. Spanner nach einem der Ansprüche 1 bis 7, wobei das Auslassregulierventil ein Kugelrückschlagventil (66) umfasst.

9. Spanner nach einem der vorhergehenden Ansprüche, des Weiteren mit einem Spannerarm (32) mit einer Kettenseite (37) zum Kontakt mit der zu spannenden Kette (36), wobei mindestens ein anderer Teil des Spanners als der Spannerarm (32) selbst in dem Spannerarm (32) angeordnet ist.

10. Spanner nach Anspruch 9, des Weiteren mit einem ortsfesten Widerlager (33), das derart mit einem ausfahrbaren Ende des Kolbens (31) in Kontakt kommt, dass der Spannerarm (32) von dem ortsfesten Widerlager (33) weg und in einen Weg der Kette (36) geschoben wird.

11. Spanner nach einem der vorhergehenden Ansprüche, wobei das Einlassregulierventil (52) in dem Kolben (31) angeordnet ist und das Auslassregulierventil (50) in der Kolbenbohrung (42) angeordnet ist.

12. Spanner nach einem der Ansprüche 1 bis 10, wobei wobei das Einlassregulierventil (52) in der Kolbenbohrung (42) angeordnet ist und das Auslassregulierventil (50) in dem Kolben (31) angeordnet ist.

13. Spanner nach einem der vorhergehenden Ansprüche, wobei das Einlassregulierventil (52) ein Tellerrückschlagventil (60) ist.

14. Spanner nach einem der vorhergehenden Ansprüche, wobei das Einlassregulierventil (52) ein Kugelrückschlagventil (66) ist.

15. Spanner nach einem der vorhergehenden Ansprüche, wobei das Einlassregulierventil (52) unter dem Flüssigkeitsspiegel (34) liegt, wenn das Ende der Kolbenanordnung in Flüssigkeit eingetaucht ist.

16. Spanner nach Anspruch 3, wobei der Spanner derart angebracht ist, dass der Einlassweg (54) unter dem Flüssigkeitsspiegel liegt, wenn das Ende der Kolbenanordnung in Flüssigkeit eingetaucht ist.

17. Verfahren zum Aufbringen von Spannung auf eine Kette, mit den folgenden Schritten:
a) Bereitstellen eines Spanners mit
i) einer Kolbenanordnung mit:
A) einem Kolben (31) mit einem hohlen Innenraum und einer Kolbenbohrung (42), die den Kolben (31);
B) einem Einlassregulierventil (52) zum Steuern des Eintritts von Flüssigkeit in die Kammer, das derart angeordnet ist, dass das Einlassregulierventil einen Flüssigkeitsstrom in den hohlen Innenraum ermöglicht, wenn ein Ende der Kolbenanordnung in die Flüssigkeit eingetaucht ist; und
ii) einem Rücklaufsperrmechanismus, der derart mit dem Kolben verbunden ist, dass der Kolben (31) ausfahrbar ist,
**dadurch gekennzeichnet, dass**
die Kolbenanordnung des Weiteren ein Auslassregulierventil (50) umfasst, damit keine Luft eintreten kann, wenn der Kolben ausfährt, und ein gesteuertes Überlaufen der Flüssigkeit ermöglicht wird, wenn der Kolben einfährt, und das an dem Ende der Kolbenanordnung angeordnet ist, das dem Einlassregulierventil (52) gegenüber liegt; und der Rücklaufsperrmechanismus das Einziehen des Kolbens (31) um höchstens einen einbegriffenen Spielbetrag ermöglicht;
b) Eintauchen eines Einlassendes des Spanners in eine Fluidversorgung derart, dass das Einlassregulierventil (52) unter dem Spiegel der Fluidversorgung liegt;
c) Selbstansaugen des Spanners, wobei der Spanner auf Grund der Kolbenbewegung innerhalb des einbegriffenen Spielbetrags und auf Grund der Wirkung des Einlassregulierventils und des Auslassregulierventils die Fluidversorgung in den Spanner hebt, um einen Innenraum des Spanners zu füllen.

## Revendications

1. Tensionneur hydraulique pour appliquer une tension à une chaîne, comprenant :
a) un ensemble de piston comprenant :
i) un piston (31) avec un intérieur creux, et un alésage de piston (42) entourant le piston (31) et confinant une chambre dans celui-ci ;
ii) un clapet anti-retour d'admission (52) pour contrôler l'entrée de fluide dans la chambre ; et
b) un mécanisme de non-retour (44-46) couplé au piston (31) pour permettre l'extension du piston (31)
**caractérisé en ce que**
le clapet anti-retour d'admission (52) est situé de telle manière que lorsqu'une extrémité de l'ensemble de piston est submergée dans le fluide, le clapet anti-retour d'admission (52) est situé en dessous du niveau de fluide (34) et permet le flux du fluide dans la chambre ;
le mécanisme de non-retour (44-46) est agencé de manière à permettre la rétraction du piston de pas plus d'une quantité de jeu incluse (55)
l'ensemble de piston comprend en outre un clapet anti-retour de sortie (50) pour interdire l'entrée d'air lorsque le piston s'étend et permettre un flux de sortie de fluide contrôlé lorsque le piston se rétracte, situé à une extrémité opposée de l'ensemble de piston par rapport au clapet anti-retour d'admission (52) ; et
le tensionneur agit comme un pompe auto-amorçante, ce par quoi le mouvement du piston autorisé par la quantité de jeu incluse (55) en combinaison avec le clapet anti-retour d'admission et le clapet anti-retour de sortie, permet que le tensionneur aspire le fluide dans la chambre pour remplir la chambre sans que le fluide ne soit apporté d'une source externe sous pression.

2. Tensionneur selon la revendication 1, dans lequel le mécanisme de non-retour comprend :
a) une pluralité de dents triangulaires (46) formées sur une longueur du piston (31) ; et
b) un cliquet (45) disposé en position adjacente au piston (31), dans lequel le cliquet (45) comprend une pluralité de dents triangulaires qui engagent les dents triangulaires (46) sur le piston (31).

3. Tensionneur selon la revendication 1 ou 2, comprenant en outre un passage d'entrée (54) de l'intérieur vers l'extérieur du piston (31), dans lequel le passage d'entrée (54) est connecté au clapet anti-retour d'admission.

4. Tensionneur selon l'une quelconque des revendications 1 à 3, comprenant en outre un passage de sortie (56) de l'intérieur vers l'extérieur du piston (31), dans lequel le passage de sortie est connecté au clapet anti-retour de sortie.

5. Tensionneur selon la revendication 4, dans lequel le passage de sortie (56) a une forme destinée à donner au tensionneur hydraulique un amortissement.

6. Tensionneur selon la revendication 4 ou 5, comprenant en outre un orifice (51) restreignant le passage de sortie.

7. Tensionneur selon l'une quelconque des revendications 4 à 6, comprenant en outre un chemin tortueux (58) restreignant le passage de sortie.

8. Tensionneur selon l'une quelconque des revendications 1 à 7, dans lequel le clapet anti-retour de sortie comprend un clapet anti-retour à bille (66).

9. Tensionneur selon l'une quelconque des revendications précédentes, comprenant en outre un bras de tensionneur (32) ayant un côté chaîne (37) pour contact avec la chaîne (36) devant être tendue, dans lequel au moins une partie du tensionneur autre que le bras de tensionneur (32) lui-même est disposée dans le bras de tensionneur (32).

10. Tensionneur selon la revendication 9, comprenant en outre une butée fixe (33) qui est au contact d'une extrémité extensible du piston (31) de telle manière que le bras de tensionneur (32) est repoussé de la butée fixe (33) et dans un chemin de la chaîne (36).

11. Tensionneur selon l'une quelconque des revendications précédentes, dans lequel le clapet anti-retour d'admission (52) est situé dans le piston (31) et le clapet anti-retour de sortie (50) est situé dans l'alésage de piston (42),

12. Tensionneur selon l'une quelconque des revendications 1 à 10, dans lequel le clapet anti-retour d'admission (52) est situé dans l'alésage de piston (42) et le clapet anti-retour de sortie (50) est situé dans le piston (31).

13. Tensionneur selon l'une quelconque des revendications précédentes, dans lequel le clapet anti-retour d'admission (52) est un clapet anti-retour de type parapluie (60).

14. Tensionneur selon l'une quelconque des revendications précédentes, dans lequel le clapet anti-retour d'admission (52) est un clapet anti-retour à bille (66).

15. Tensionneur selon l'une quelconque des revendications précédentes, dans lequel, lorsque l'extrémité de l'ensemble de piston est submergée dans le fluide, le clapet anti-retour d'admission (52) est situé en dessous du niveau du fluide.

16. Tensionneur selon la revendication 3, dans lequel le tensionneur est monté de telle manière que le passage d'entrée (54) est situé en dessous du niveau du fluide lorsque l'extrémité de l'ensemble de piston est submergée dans le fluide.

17. Procédé pour appliquer une tension à une chaîne comprenant les étapes de :
a) prévoir un tensionneur comprenant :
i) un ensemble de piston comprenant :
A) un piston (31) avec un intérieur creux, et un alésage de piston (42) entourant le piston (31) ;
B) un clapet anti-retour d'admission (52) pour contrôler une entrée de fluide dans le piston, situé de telle manière que lorsqu'une extrémité de l'ensemble de piston est submergée dans le fluide, le clapet anti-retour d'admission permet que le fluide pénètre dans l'intérieur creux ; et
ii) un mécanisme de non-retour couplé au piston (31) de telle manière que le piston (31) est extensible
**caractérisé par**
l'ensemble de piston comprenant en outre un clapet anti-retour de sortie (50) pour interdire l'entrée d'air lorsque le piston s'étend et pour permettre un flux de fluide contrôlé lorsque le piston se rétracte, situé à une extrémité opposée de l'ensemble de piston par rapport au clapet anti-retour d'admission (52) ; et le mécanisme de non-retour permettant la rétraction du piston (31) de pas plus d'une quantité de jeu incluse ;
b) submerger une extrémité d'admission du tensionneur dans une arrivée de fluide de telle manière que le clapet anti-retour d'admission (52) est sous un niveau de l'arrivée de fluide ;
c) auto-amorcer le tensionneur, où le tensionneur soulève l'arrivée de fluide dans le tensionneur du fait du mouvement du piston dans la limite de la quantité de jeu incluse et du fait de l'action du clapet anti-retour d'admission et du clapet anti-retour de sortie, pour remplir un intérieur du tensionneur.
